(19) Europäisches Patentamt

European Patent Office

Office européen des brevets

(11) Publication number: **0 247 636 B1**

## EUROPEAN PATENT SPECIFICATION

(12)

(45) Date of publication of patent specification: **03.06.92**  (51) Int. Cl.⁵: **F16K 1/20**, F16K 27/02

(21) Application number: **87107899.4**

(22) Date of filing: **01.06.87**

(54) **Reduced height dust valve.**

(30) Priority: **30.05.86 US 868764**

(43) Date of publication of application:
**02.12.87 Bulletin 87/49**

(45) Publication of the grant of the patent:
**03.06.92 Bulletin 92/23**

(84) Designated Contracting States:
**DE FR GB NL**

(56) References cited:
**US-A- 3 257 045**
**US-A- 3 410 422**
**US-A- 4 480 812**
**US-A- 4 498 492**

(73) Proprietor: **PLATTCO CORPORATION**
**18 White Street**
**Plattsburgh New York 12901(US)**

(72) Inventor: **Carpentier, Urgel Ramuel**
**3 Bailey Avenue**
**Plattsburgh New York(US)**

(74) Representative: **Henkel, Feiler, Hänzel & Partner**
**Möhlstrasse 37**
**W-8000 München 80(DE)**

Rank Xerox (UK) Business Services

# Description

This invention relates to a dust trap of the type comprising a double dump airlock valve as defined by the precharacterizing features of claims 1.

Double dump airlock valves have been known for many years, and find wide applications in for example mining, milling, processing, waste disposal and waste incineration operations. The valves are typically used in a vacuum and pressure system to remove particulate material and thereby protect a collection system such as a bag house or the like. U.S. Patent Nos. 3,257,045 and the improvement thereon No. 3,410,422, assigned to the assignee of this invention, describe a dust trap of the kind in question

In order to maintain either a positive or negative pressurized system the valves are utilized in pairs. Particulate material will collect in the upper valve. The lower valve is initially closed when the upper valve is opened to dump the collected material onto the lower valve. The upper valve is then closed and the lower valve opened to remove the material from the system without effecting the pressure in the collection system. Flap valves are particularly well suited when the material is abrasive, at an increased temperature, or as noted above when the valve must function as an airlock. Maintainance costs of systems using such valves then are reduced because the particulate material is removed from the collection system before damage can be done to fans, cyclones, precipirtators, duct work, piping and the like.

Prior art flap valves however have a major disadvantage. The valve height requires excessive headroom. Typically, a valve having an 20,32 cm (8 inches) opening would have a height of from 53,34 to 81,28 cm (21 to 32 inches). In many cases then, flap valves cannot be used because of this headroom requirement. In some cases, rotary valves can be substituted for flap valves because rotary valves for an 20,32 cm (8 inches) opening, range in height from 30,48 to 48,26 cm (12 to 19 inches). There are, however, certain applications as noted above in which the best performance can be achieved with a flap valve.

In addition, when the valve system is used in an airlock in for example, a vacuum conveyor system considerable torque may be required in order to open the valve flapper. This problem was addressed in U.S. Patent No. 4,480,812, also assigned to the assignee of this application. In that patent, an off center mounting was used to crack one edge of the flapper away from the seat initially before the entire flapper rotated away from the seat. Similarly, in U.S. Patent No. 4,308,894, the flapper included a separate pressure release valve.

However, the inventor of the present invention has discovered that the sliding action typical of a gate valve can be combined in a flap valve design to release the pressure upon opening but provide the positive closure of a flap valve. In addition, it has been discovered that these features can be combined in a short valve wherein in an 20,32 cm (8 inch) opening, the double dump valve system is only half the height of standard flap valves. The sliding action upon opening of the flap also reduces the torque required, and the sliding action upon closing tends to flush any abrasive material from the valve seat so that an airtight closure results.

In the dust trap of the present invention the actuating shaft of each valve is mounted at the bottom of the valve body instead of the top as is standard in prior art valves. A link or arm connects between the actuating shaft and the flapper and is mounted substantially off center on the flapper. The edge of the flapper plate and the corresponding edge of the seat adjacent the off center connection further define radiuses for pivotal movement against each other.

Accordingly, the flapper plate of each valve of the present invention opens by initially sliding and then pivoting at the radial surfaces as the plate swings open until a spacer lug on the underside thereof encounters the actuating arm. This then breaks the vacuum requiring less power or torque, and similarly, when the plate swings open tends to jar loose compacted particulate material therein. Upon closing, the action is reversed, and the wiping of the machined surface of the seat as the flapper plate closes tends to flush interfacing particles or debris from the seat to achieve a fully aligned seal.

Each valve of the present invention then achieves a shortened height through the pivoting action of a surface of the plate against a surface of the seat whereby the height required is essentially the length or diameter of the flapper plate itself. Therefore in an 20,32 cm (8 inches) opening the height of a double dump valve of this invention is only 40,64 cm (16 inches).

Therefore, in accordance with the characterizing features of claim 1, the object is attained to provide a dust trap of the kind defined at the preamble with substantially reduced headroom requirements, whereby less torque is required to open each valve.

This objects will become readily apparent with reference to the drawings and following description wherein:

Figure 1 is a side view of a double dump valve dust trap according to the invention showing the flapper and seat in phantom.

Figure 2 is a top view of the device of Figure 1.

Figure 3 is a front view of the device of Figure 1 with one of the valves removed.

Figure 4 is a fragmentary cross-sectional view showing the radial surfaces of the flapper and seat.

Figure 5 is a fragmentary cross sectional view illustrating the spacer lug on the underside of the flapper plate.

Figure 6 is a fragmentary cross-sectional view illustrating the actuator arm and flapper plate in a closed position.

Figure 7 is a view similar to Figure 6 showing the flapper plate in the open position.

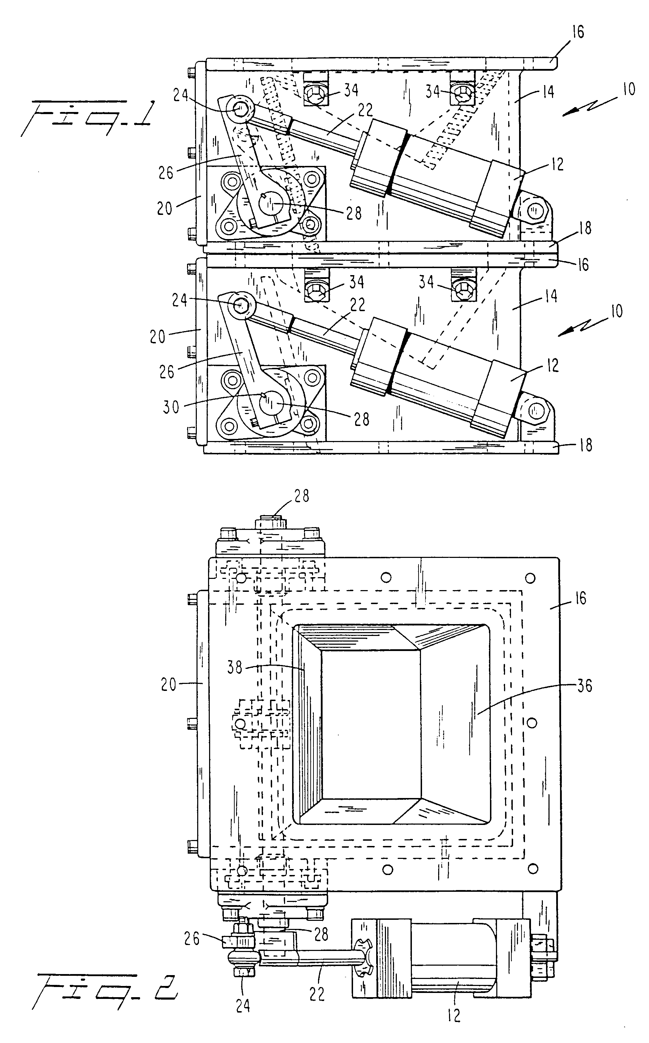

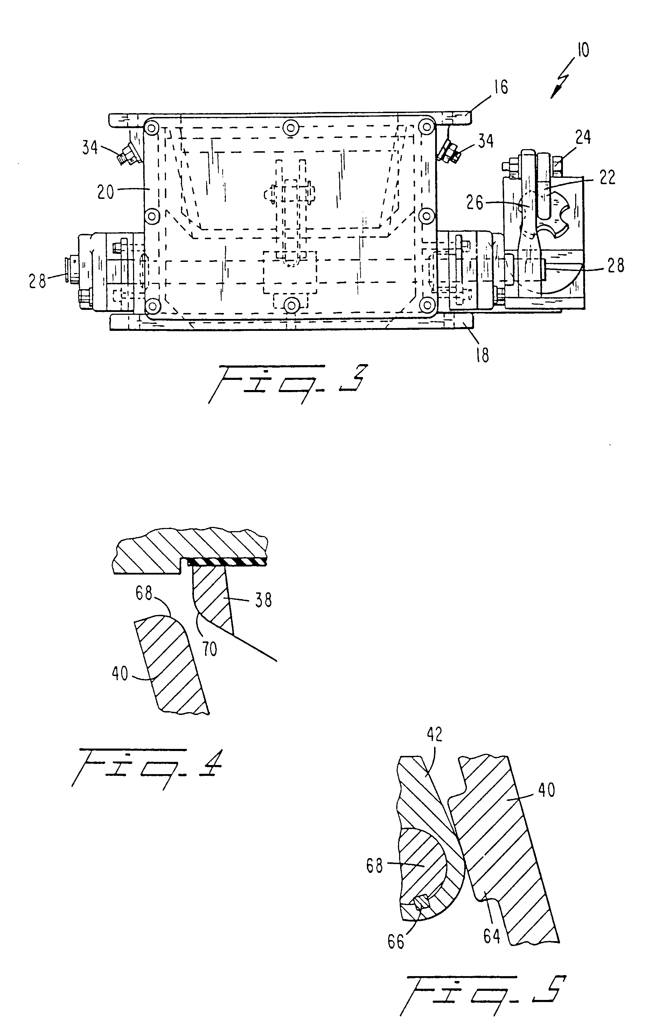

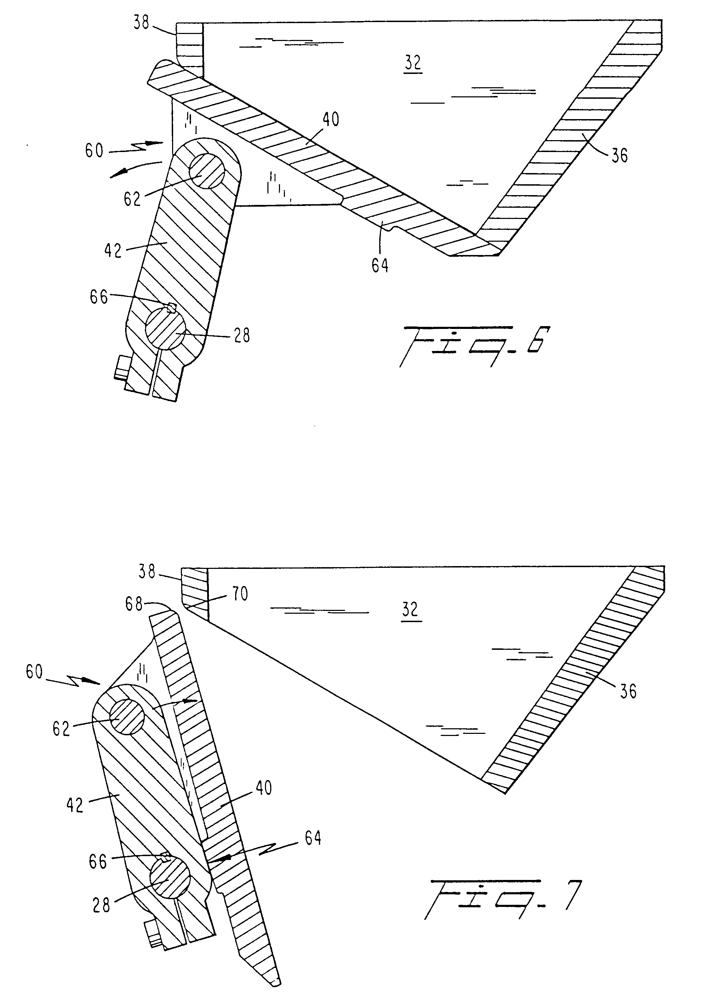

With attention to the drawings and to Figures 1-3 in particular, as shown in Figure 1, the valves 10 of the dust trap according to the invention are normally stacked and bolted together. In an airlock situation, as will be subsequently explained, the opening and closing of the valves by pistons 12 are cycled. While the means for opening and closing the valve shown is a piston 12 this invention is not intended to be limited to a hydraulic or pneumatic means for opening and closing the valves. A motor could be utilized, or an electrical means, or in fact, the valves could be opened and closed manually.

The valve 10 generally consists of a valve body 14 which defines a passage therethrough and includes upper and lower mounting flanges 16 and 18. An access door 20 is provided on a side thereof for inspection and replacement of any worn internal parts.

The connecting rod 22 from piston 12 is pivotally attached at pin 24 to an end of link 26. The opposite end of link 26 is mounted on actuator shaft 28. Actuator shaft 28 is mounted on the lower portion of valve body 10 as shown in the drawings. Conventionally, such shafts were mounted in the upper portion of the valve body. However, it has been discovered that by mounting the actuator shaft 28 in the lower portion of the valve body 10 the valve flapper plate can be linked thereto for a sliding movement in addition to pivotal movement as will be subsequently explained. As will be obvious to those skilled in the art link 26 is rigidly attached to shaft 28 using, as shown in Figure 1, a key 30.

With further attention to Figures 6 and 7, internally, a seat 32 is mounted within valve body 10 and secured for example by bolts 34 (Fig. 1). Seat 32 then may be removed through access 20 for regrinding or replacement.

Seat 32 has an elongated right wall 36 and a shortened left wall 38. A flapper plate 40 seats against the machined lower surface of seat 32 as shown in Figure 6 when the valve is in the closed position. Flapper plate 40 is pivotally attached to an actuator arm 42 preferrably by a wrist and pin assembly 60 whereby plate 40 is pivotally mounted on arm 42 by pin 62. The underside of plate 40 mounts a space lug 64 which seats against arm 42 when the valve is in the open position shown in Figure 7.

Arm 42 is then rigidly attached to actuator shaft 28 by for example key 66 and clamped cap screw.

Flapper plate 40 has a rear radial surface 68 and the rear portion 38 of seat 32 similarly has a radial surface 70.

As actuator shaft 28 rotates counterclockwise from the posttion shown in Figure 6, flapper plate 40 initially slides toward rear wall 38, and then pivots to the position of Figure 7. To close the valve, the procedure is reversed, and the pivotal movement puts radial surfaces 68 and 70 into contact. Clockwise rotation of shaft 28 from the position of Figure 7 will cause the flapper plate 40, at its edge 68, to pivot against the corresponding edge 70 of seat 32 until arm 42 passes the vertical. The plate 40 will then slide forwardly to seat plate 40 on seat 32 as shown in Figure 6.

As will be obvious, removal of access door 20 will provide full access to flapper plate 40 for inspection, or removal and replacement.

In operation, valves 10 would be stacked as shown in Figure 1. The upper flange 16 of the upper valve 10 would then be bolted to a vacuum line of pressure (not shown). Both valves would be in the closed position of Figure 6 wherein flapper plate 40 is seated against seat 32. When particulate material accumulates in the upper valve, the upper valve is opened to dump the material onto the closed lower valve. The upper valve is then closed and the lower valve opened in order to dump the material. The two valves together then function as an airlock.

Normally prior art valves as noted above required much more headroom to accomodate the swing of the flapper plate and its actuating arm, especially when the actuator shaft was disposed in the upper portion of the valve body. In the instant case however flapper 40 pivots about pin 62 and surfaces 68 and 70 pivot about each other so that in the open position flapper 40 essentially overlaps actuator arm 42. In this fashion, the headroom required is essentially the height of the flapper plate 40 itself. Therefore, the dust valve of this invention is essentially one half the height of prior art dust valves, and requires a headroom approximately equivalent to a rotary valve. In addition, the sliding action enclosure permits the flapper plate to flush any accumulated particulate material from the machine surface of the seat 32 to ensure a tight seal.

**Claims**

1. A dust trap comprising a pair of dust valves (10) coaxially mounted to each other, each valve (10) comprising:

a valve body (14) having a longitudinal flow path therethrough,

an actuator shaft (28) and means (12, 22, 24, 26) coupled thereto for rotating said shaft (28) about 90 degrees,

a conduit member removably mounted in the upper portion of said valve body (14) surrounding the flow path and forming a valve seat (32) in a plane disposed at an acute angle to the longitudinal axis of said valve body (14), said valve seat (32) being a rectangle having upper and lower ends and annular sides, said upper end being disposed adjacent the side of said valve body (14) where said actuator shaft (28) is mounted,

an actuator arm (42) affixed to said actuator shaft (28) and a valve flapper plate pivotably mounted on the end of said arm (42) opposite said actuator shaft (28), said arm (42) being disposed to seat and unseat the upper surface of said flapper plate (40) against said valve seat (32) to open and close the valve (10) as said actuator shaft (28) rotates whereby as the valve (10) opens, said flapper plate (40) will pivot downwardly,

characterized

in that the actuator shaft (28) is rotatably mounted on and extending through the lower portion of said valve body (14) adjacent a side thereof,

in that the end of the flapper plate (40) adjacent the upper end of the valve seat (32) is pivotably mounted on the actuator arm (42), and

in that the actuator arm (42) is disposed so that when the flapper plate (40) is seated on the valve seat (32), said arm (42) will lie in a plane disposed at an acute angle to the vertical to the valve (10) on the side thereof corresponding to the valve seat (32) side, whereby when said actuator shaft (28) rotates to open the valve (10) said plate (40) will be drawn in a sliding motion across said valve seat until said arm (42) is substantially vertical whereupon by further rotation of the actuator shaft (28) said plate (40) will pivot downwardly to finally lie against said arm (42) and when said shaft (28) rotates to close said valve (10) the movement of said flapper plate (40) will be reversed.

2. The dust trap according to claim 1, wherein the upper end surface of the valve seat (32) and the corresponding surface of the flapper plate (40) define opposed radial surfaces.

**Revendications**

1. Un collecteur de poussières comportant une paire de vannes à poussières (10) montées coaxialement l'une à l'autre, chaque vanne (10) comprenant :

un corps de vanne (14) présentant un trajet longitudinal d'écoulement à travers celui-ci,

un arbre d'actionnement (28) et des moyens (12,22,24,26) couplés à celui-ci pour faire tourner ledit arbre (28) sur 90 degrés,

un élément de conduite monté de manière amovible dans la partie supérieure dudit corps de vanne (14) entourant le trajet d'écoulement et formant un siège de vanne (32) dans un plan disposé suivant un angle aigu par rapport à l'axe longitudinal dudit corps de vanne (14), ledit siège de vanne (32) étant un rectangle présentant des extrémités supérieure et inférieure et des côtés annulaires, ladite extrémité supérieure étant disposée en adjacence au côté dudit corps de vanne (14) où ledit arbre d'actionnement (28) est monté,

un bras d'actionnement (42) fixé audit arbre d'actionnement (28) et une plaque formant volet de vanne montée de manière pivotante sur l'extrémité dudit bras (42) opposée audit arbre d'actionnement (28), ledit bras (42) étant disposé pour appuyer et éloigner la surface supérieure de ladite plaque (40) formant volet par rapport audit siège de vanne (32) pour ouvrir et fermer la vanne (10) lorsque ledit arbre d'actionnement (28) tourne, de sorte que, lorsque la vanne (10) s'ouvre, ladite plaque (40) formant volet pivote vers le bas,

caractérisé

en ce que l'arbre d'actionnement (28) est monté de manière tournante, en la traversant, sur la partie inférieure dudit corps de vanne (14) en adjacence à un côté de celui-ci,

en ce que l'extrémité de la plaque (40) formant volet, adjacente à l'extrémité supérieure du siège de vanne (32), est montée de manière pivotante sur le bras d'actionnement (42), et

en ce que le bras d'actionnement (42) est disposé de telle manière que, lorsque la plaque (40) formant volet est en appui sur le siège de vanne (32), ledit bras (42) s'étend dans un plan disposé suivant un angle aigu par rapport à la verticale à la vanne (10), sur le côté de celle-ci correspondant au côté du siège de vanne (32), de sorte que, lorsque ledit arbre d'actionnement (28) tourne pour ouvrir la vanne (10), ladite plaque (40) est tirée suivant un mouvement de coulissement à travers ledit siège de vanne jusqu'à ce que ledit bras (42) soit sensiblement vertical, après quoi, par une rotation additionnelle de l'arbre de pivotement (28), ladite plaque (40) pivote vers le bas pour venir finalement reposer contre ledit bras (42) et, lorsque ledit arbre (28) tourne pour fermer ladite vanne (10), le mouvement de ladite plaque (40) formant volet est inversé.

2. Le collecteur de poussières selon la revendication 1, dans lequel la surface extrême supérieure du siège de vanne (32) et la surface correspondante de la plaque (40) formant volet définissent des surfaces radiales opposées.

**Patentansprüche**

1. Staubsammler mit zwei koaxial zueinander eingebauten Staubventilen (10), wobei jedes Staubventil (10) umfaßt:

einen Ventilkörper (14) mit einem durch diesen in Längsrichtung verlaufenden Strömungsdurchgang,

eine Stellgliedwelle (28) mit mit dieser gekoppelten Mitteln (12, 22, 24, 26) zum Drehen der Welle (28) über 90°,

ein ausbaubar in den oberen Abschnitt des Ventilkörpers (14) eingebautes Leitungselement, das den Strömungsdurchgang umgibt und einen Ventilsitz (32) in einer unter einem spitzen Winkel zur Längsachse des Ventilkörpers (14) angeordneten Ebene bildet, wobei der Ventilsitz (32) ein Rechteck mit oberen und unteren Enden sowie ringförmigen Seiten ist, von denen das obere Ende nahe der Seite des Ventilkörpers (14), an welcher die Stellgliedwelle (28) gelagert ist, angeordnet ist,

einen an der Stellgliedwelle (28) befestigten Stellgliedarm (42) und eine an dem der Stellgliedwelle (28) gegenüberliegenden Ende des Arms (42) schwenkbar gelagerte Ventilklappenplatte, wobei der Arm (42) so angeordnet ist, daß er die Oberseite der Klappenplatte (40) zum Öffnen und Schließen des Ventils (10) bei Drehung der Stellgliedwelle (28) an den Ventilsitz (32) anlegt und von ihm abhebt, so daß beim Öffnen des Ventils (10) die Klappenplatte (40) nach unten schwenkt,

dadurch gekennzeichnet,

die Stellgliedwelle (28) am unteren Abschnitt des Ventilkörpers (14) drehbar gelagert ist und sich durch diesen unteren Abschnitt an der einen Seite desselben erstreckt,

daß das Ende der Klappenplatte (40) nahe dem oberen Ende des Ventilsitzes (32) schwenkbar am Stellgliedarm (42) gelagert ist und

daß der Stellgliedarm (42) so angeordnet ist, daß er dann, wenn die Klappenplatte (40) am Ventilsitz (32) anliegt, in einer Ebene liegt, die unter einem spitzen Winkel zur Lotrechten zum Ventil (10) an der Seite desselben, welche der Seite des Ventilsitzes (32) entspricht, angeordnet ist, so daß bei Drehung der Stellgliedwelle (28) zum Öffnen des Ventils (10) die Platte (40) mit einer Schiebe- oder Gleitbewegung über den Ventilsitz gezogen wird, bis der Arm (42) im wesentlichen lotrecht steht, woraufhin die Platte (40) bei weiterer Drehung der Stellgliedwelle (28) nach unten schwenkt, um schließlich gegen den Arm (42) anzuliegen, und bei der Drehung der Welle (28) zum Schließen des Ventils (10) die Bewegung der Klappenplatte (40) umgekehrt ist.

2. Staubsammler nach Anspruch 1, wobei die obere Endfläche des Ventilsitzes (32) und die entsprechende Fläche der Klappenplatte (40) gegenüberliegende radiale Flächen festlegen.

Fig.1

Fig.2

FIG. 3

FIG. 4

FIG. 5

EP 0 247 636 B1

_Fig. 6_

_Fig. 7_

8